# EUROPÄISCHE PATENTSCHRIFT

(11) **EP 1 799 517 B1**
(45) Veröffentlichungstag und Bekanntmachung des Hinweises auf die Patenterteilung: **15.02.2012**
(21) Anmeldenummer: 05763312.5
(22) Anmeldetag: 19.07.2005
(51) Int. Cl.: B60R 21/34, B60R 19/12, B62D 35/02

(54) **VERSTÄRKUNGSELEMENT FÜR EINEN UNTEREN BEREICH EINES FRONTSTOSSFÄNGERS, SOWIE DAMIT AUSGERÜSTETER FRONTSTOSSFÄNGER FÜR EIN KRAFTFAHRZEUG**
REINFORCING ELEMENT FOR A LOWER AREA OF A FRONT BUMPER, AND CORRESPONDINGLY EQUIPPED BUMPER FOR A MOTOR VEHICLE
ELEMENT DE RENFORT POUR UNE ZONE INFERIEURE D'UN PARE-CHOCS AVANT ET PARE-CHOCS AVANT DE VEHICULE AUTOMOBILE EQUIPE D'UN TEL ELEMENT

(30) Priorität: 21.07.2004 DE 102004035435
(43) Veröffentlichungstag der Anmeldung: 27.06.2007
(73) Patentinhaber: GM Global Technology Operations LLC, Detroit, MI 48265-3000 (US); Faurecia Exteriors GmbH, 31655 Stadthagen (DE)
(72) Erfinder: STELLER, Claus, 64521 Gross-Gerau (DE); KAMMERER, Roland, 69300 Caluire (FR)
(74) Vertreter: Strauss, Peter
(86) Internationale Anmeldenummer: PCT/EP2005/007860
(87) Internationale Veröffentlichungsnummer: WO 2006/008137

(56) Entgegenhaltungen:
- EP-A- 1 038 732
- EP-A- 1 238 862
- EP-A- 1 241 080
- EP-A- 1 300 293
- EP-A- 1 433 664
- EP-A- 1 564 088
- DE-A1-102004 007 571
- FR-A- 2 859 970
- US-B1- 6 634 702
- PATENT ABSTRACTS OF JAPAN Bd. 2000, Nr. 04, 31. August 2000 (2000-08-31) & JP 2000 006739 A (NISSAN MOTOR CO LTD), 11. Januar 2000 (2000-01-11)

## Beschreibung

Die vorliegende Erfindung betrifft ein Verstärkungselement für einen unteren Bereich eines Frontstoßfängers eines Kraftfahrzeugs zum Schutz von Fußgängern beim Aufprall eines unteren Beinabschnitts gegen den unteren Bereich des Frontstoßfängers, nach dem Oberbegriff des Anspruchs 1, sowie einen Frontstoßfänger für ein Kraftfahrzeug mit einem ersten Stoßbereich, der mit einer Stoßstange eines anderen Kraftfahrzeugs in Kontakt kommen soll, sowie einem unterhalb des ersten Stoßbereichs angeordneten zweiten Stoßbereich, der mit einem Fußgänger mit dessen unteren Beinabschnitt in Kontakt kommen soll, nach dem Oberbegriff des Anspruchs 10. Ein solches Verstärkungselement bzw. ein solcher Frontstoßfänger sind aus EP-A-1 038 732 A1 bekannt.

EP 1 241 080 A2 offenbart einen Frontstoßfängeraufbau, bei dem ein über dem Kühler nach vorn vorspringendes, mit Verstärkungsrippen versehenes unteres Rahmenteil eines Kühlerträgers ein Stoßfängerelement aus aufgeschäumtem Kunstharz trägt, das von einem unteren Bereich eines Stoßfängers schalenartig umhüllt ist und bei dem an dem Rahmenteil zwischen den Verstärkungsrippen Befestigungspunkte für den unteren Stoßfängerbereich ausgebildet sind.

Aufgabe der vorliegenden Erfindung ist, ein Verstärkungselement für einen unteren Bereich eines Frontstoßfängers eines Kraftfahrzeugs der eingangs diskutierten Art zu schaffen, das kostengünstig hergestellt, leicht montiert, und im Bedarfsfalle auch preiswert repariert werden kann.

Ein weiterer wichtiger Aspekt der vorliegenden Erfindung ist die wesentliche Verbesserung der Schutzeigenschaften eines damit ausgestatteten Frontstoßfängers, um die heute geforderten Grenzwerte deutlich zu unterschreiten.

Diese Aufgabe wird gelöst durch die Merkmale des Anspruchs 1, wie auch durch die Merkmale des Anspruchs 10.

Dabei wird ein Verstärkungselement für einen unteren Bereich eines Frontstoßfängers eines Kraftfahrzeugs zum Schutz von Fußgängern beim Aufprall eines unteren Beinabschnitts, wie beispielsweise der Fessel, dem Schienbein, dem Wadenbein oder einem anderen Abschnitt des Unterschenkels, gegen den unteren Bereich des Frontstoßfängers vorgeschlagen, wobei das Verstärkungselement sich in Fahrtrichtung hinter dem unteren Bereich des Frontstoßfängers an diesen anschließt, eine Grundplatte mit daran befestigten Verstärkungsrippen aufweist, und sich im wesentlichen in horizontaler Richtung näherungsweise über die Breite des Frontstoßfängers erstreckt.

In dem das Ver-stärkungselement als separate, in den unteren Stoßfängerbereich integrierbare Platte ausgebildet ist, kann in vorteilhafter Weise eine Optimierung des plattenartig ausgebildeten separaten Verstärkungselements in Bezug auf dessen mechanische Eigenschaften vorgenommen werden, ohne zugleich Probleme bei einer Optimierung des ästhetischen Erscheinungsbildes des den Betrachter ansprechenden Äußeren des Frontstoßfängers befürchten zu müssen. Darüber hinaus kann eine Optimierung der Festigkeit des Verstärkungselements erfolgen, ohne zugleich eine Verschlechterung der aerodynamischen Eigenschaften des Frontstoßfängers in Kauf nehmen zu müssen.

Folglich können die aerodynamischen Eigenschaften, das ästhetische Erscheinungsbild, die konstruktive Durchbildung, die Festigkeit wie auch die sonstigen mechanischen Eigenschaften eines Frontstoßfängers bzw. dessen unteren Stoßbereich separat unabhängig voneinander optimiert werden, um somit in der Summe ein wesentlich besseres Erscheinungsbild zu erhalten, eine verbesserte Aerodynamik zu erreichen, und zugleich einen wesentlich verbesserten Schutz von Fußgängern gegen Verletzungsgefahr zu erzielen, d.h. letztlich die geforderten Grenzwerte möglichst weit zu unterschreiten.

Darüber hinaus bietet das erfindungsgemäße separate plattenartige Verstärkungselement den Vorteil, dass bei einer Beschädigung des Verstärkungselements, beispielsweise aufgrund eines versehentlichen Überfahrens eines besonders hohen Bordsteines oder beim Aufsetzen auf einer Rampe eines Parkhauses,
das Verstärkungselement separat ausgetauscht werden kann. Dadurch können die immensen Reparaturkosten reduziert werden. Dies führt zugleich zu einer wesentlichen Steigerung der Akzeptanz eines derart ausgebildeten Kraftfahrzeugs beim Käufer. In der Grundplatte und zwischen den Verstärkungsrippen ausgebildete Befestigungspunkte, vorzugsweise Einrastnasen oder dergleichen Rast- bzw. Einklippsmittel, bieten eine besonders kostengünstige Befesti-gungsmöglichkeit des Verstärkungselements im unteren Bereich des Frontstoßfängers. Hierzu ist weiter vorgesehen, dass die Befestigungspunkte in der Grundplatte bzw. zwischen den Rippen mit entsprechenden Befestigungspunkten in der Schale des unteren Stoßfängerbereichs, die vorzugsweise als Einrastöffnungen ausgebildet sind, korrelieren. Damit lassen sich die zur Montage des erfindungsgemäßen Frontstoßfängers erforderlichen Handgriffe wesentlich reduzieren. Somit wird in vorteilhafter Weise sichergestellt, dass das erfindungsgemäße Verstärkungselement, welches als separate, in den unteren Stoßfängerbereich integrierbare Platte vorliegt, problemlos mit einem Handgriff in dem unteren Stoßfängerbereich durch Einrasten integriert werden kann. Eine Vereinfachung der Fertigungstiefe sowie der Montageabläufe in der Linie ist ein weiterer positiver Effekt.

Weiterhin bietet der erfindungsgemäße Frontstoßfänger wie auch das dafür vorgesehene erfindungsgemäße Verstärkungselement den Vorteil, dass diese kostengünstiger herzustellen und wesentlich einfacher am laufenden Band in der Linie zu montieren sind.

Schließlich kann das Verstärkungselement als separates Bauteil in vorteilhafter Weise wesentlich einfacher auf das jeweilige kraftfahrzeugtypspezifische Stoßfängersystem abgestimmt werden. Dabei ist es auch erstmalig ohne größeren zusätzlichen Aufwand auf ein ähnliches Sondermodell eines Standard-Stoßfängersystems übertragbar. Zudem fallen die Entwicklungs- und Änderungskosten für das Werkzeug zur Herstellung des Verstärkungselements wesentlich günstiger aus, da die hierfür erforderlichen Werkzeuge kleiner bauen. Damit lassen sich die Gesamtkosten für den Frontstoßfänger in vorteilhafter Weise weiter senken.

Vorteilhafte Weiterbildungen der Erfindung ergeben sich aus den Merkmalen der Unteransprüche.

So ist in einer beispielhaften Ausführungsform des Verstärkungselements vorgesehen, dass dieses am unteren Stoßfängerbereich mittels Verkleben, Verklippsen, Verschweißen, Vernieten, Verschrauben oder dergleicher montierbar ist. Auf diese Weise verstärkt sich der vorteilhafte Effekt eines kundendienstfreundlich ausgebildeten, leicht austauschbaren, als separate Platte ausgebildeten Verstärkungselements, das problemlos montiert, demontiert und ausgetauscht werden kann.

In einer weiter bevorzugten Ausführungsform ist vorgesehen, dass die Verstärkungsrippen sich im montierten Zustand des Verstärkungselements von der oben liegenden, mit der Rückseite zum Motorraum weisenden Grundplatte nach unten erstrecken. Dies bietet den Vorteil, dass ein mit diesem Verstärkungselement ausgerüsteter Frontstoßfängers zum Motorraum hin eine sauber abgeschlossene Fläche anbietet, die keinerlei Angriffspunkte für möglicherweise aufgrund Alterungsprozessen auslaufendem Öl, Kühlmittel vom Kühler oder dergleichen bietet und zudem im normalen Alltagsgebrauch sicherstellt, dass durch den Motorraum eindringender oder von der Fahrbahn aufgewirbelter Schmutz, Spritz-, Dreck- oder Regenwasser problemlos über die ebene Fläche des Verstärkungselementrückens abfließen kann, dort nicht in irgendwelchen Kammern haftet oder sich dort absetzt und letztlich beispielsweise im Winter zu Frostschäden oder dergleichen führt.

Die Grundplatte des Verstärkungselements soll zwar bevorzugt nach unten abstehende Rippen aufweisen, diese können aber auch teilweise nach oben abstehen. Die Grundplatte braucht nicht absolut eben zu sein, sondern kann z.B. als leicht gewölbte Platte sich mit ihrer Geometrie den vorliegenden Package-Verhältnissen des Kraftfahrzeuges anpassen. Die Rippen können an der Grundplatte angesteckt, angenietet, angeschraubt, angespritzt, angeformt, aufgeklebt oder als Zusammenbauteil mit dieser verbunden sein. Die Verstärkungs- bzw. Versteifungsrippen können bezüglich deren Abstand zueinander, hinsichtlich deren Materialstärke, Bauhöhe, Länge, Lage, Ausrichtung und Verbindungen untereinander (z.B. als Diagonalrippen, Querrippen, Kreuzrippen oder dergleichen) für eine optimale Erzielung der "lower leg"-Fußgängerschutzvorgaben unter Berücksichtigung der fahrzeugspezifischen Gegebenheiten optimal aufeinander abgestimmt werden. Die Verstärkungsrippen brauchen nicht zwingend geradlinig zu verlaufen.

Entsprechend einer weiter bevorzugten Ausführungsform ist vorgesehen, dass das Verstärkungselement zumindest teilweise mit einem in Fahrtrichtung vorderen Abschnitt vom unteren Stoßfängerbereich schalenartig umhüllt ist. Dies bietet den Vorteil einer optimalen aerodynamischen Ummantelung bzw. Einhüllung des plattenartig ausgebildeten Verstärkungselementes. Damit können auf diese Weise aerodynamische Belange wie auch Auftriebseffekte Berücksichtigung finden, ohne zugleich die mechanische Steifigkeit und Belastbarkeit des Verstärkungselements zu beeinträchtigen. Zugleich ergibt die Verbindung aus schalenartiger Umhüllung des Stoßfängerbereichs mit dem Stärkungselement eine besonders versteifte und stabile Konstruktion, so dass die geforderten Grenzwerte für den Fußgängerschutz besonders gut eingehalten werden können.

Gemäß einer weiter bevorzugten Ausführungsform ist vorgesehen, dass sich die Verstärkungsrippen im Wesentlichen rechtwinklig von der Grundplatte erstrecken und aus dem selben Material einstückig an diese angeformt sind. Damit kann in vorteilhafter Weise das Verstärkungselement als Einbauteil aus dem selben Material extrem kostengünstig hergestellt werden, beispielsweise als Kunststoffspritzgussteil oder dergleichen.

Ferner ist vorgesehen, dass die Grundplatte im Fahrzeuglängsrichtung hinteren Bereich kreuzförmig ausgebildete Verstärkungsrippen aufweist, an die sich nach vorne hin parallel zueinander angeordnete, im wesentlichen in Längsrichtung orientierte Längsrippen anschließen. Dies bietet den Vorteil, dass das plattenartige Verstärkungselement im übertragenen Sinne wie eine Art Hand ausgebildet ist, von deren Handwurzel sich die rippenartigen Finger nach vorne erstrecken, deren Fingerspitzen die Aufprallkräfte vom unteren Stoßfängerbereich aufnehmen, dabei den Aufprall mildern und die Aufprallenergie kontrolliert über die Handwurzel ableiten. Damit ergibt sich ein optimaler Kraftfluss und ein besonders guter Schutz der betroffenen Person beim Aufprall.

Des weiteren ist vorgesehen, dass die Grundplatte auf deren rückwärtiger, dem Motorraum zugewandter Seite eine Kühlerabweiseinrichtung trägt. Damit wird in vorteilhafter Weise bei einem Aufprall sichergestellt, dass der Kühler an entsprechenden Sollbruchstellen abgeschert bzw. losgerissen wird und sich frei nach hinten bewegen kann, anstatt nach unten abzutauchen oder gegen den Motorblock gepresst zu werden. Dabei bleibt der Kühler funktionstüchtig und mit dem Fahrzeug kann die Fahrt aus eigener Kraft zumindest noch bis zur nächsten Werkstatt fortgesetzt werden. Damit kann vorteilhaft ggf. auf einen Pannendienst verzichtet werden. Zudem können die Vorgaben des sogenannten "Danner Tests" damit eingehalten werden. Schließlich ergibt sich ein verbessertes Schadensbild und dementsprechend eine günstigere Einstufung des Fahrzeuges bei den Versicherungsgesellschaften.

Schließlich ist vorgesehen, dass das Verstärkungselement aus Kunststoff, vorzugsweise aus thermoplastischen Kunststoff hergestellt ist. Dies bietet einerseits in vorteilhafter Weise eine kostengünstige Herstellung und andererseits den weiteren Vorteil einer Fertigung beispielsweise im Rahmen eines Kunststoffspritzgussverfahrens, was ebenfalls wiederum Kosteneinsparungseffekte realisieren lässt. Zudem können derartige Kunststoffteile komplex aufgebaut sein, hohe Festigkeiten erzielen, gleichzeitig leicht bauen und damit kein unnötiges Gewicht für das Fahrzeug bedeuten.

Die Grundplatte des Verstärkungselements wie auch dessen Rippen können zur weiteren Gewichtsreduzierung partiell mit Löchern oder Ausschnitten versehen sein. Das Verstärkungselement wird zwar bevorzugt aus Kunststoff hergestellt sein, besonders bevorzugt wird man u. a. aus Gründen der besonders guten Formbarkeit thermoplastische Kunststoffe verwenden. Statt dessen können jedoch auch GFK-, CFK oder andere Verbundwerkstoffe bzw. stabile aber zugleich leichte Materialien zum Einsatz gelangen. Es können ggf. Materialverstärkungen, z.B. Füllstoffe z.B. auch aus Metall, Inlets, Inserts oder dergleichen zur weiteren Aussteifung des Verstärkungselements vorgesehen werden.

Die vorstehend diskutierte Aufgabe wird weiterhin dadurch gelöst, dass ein Frontstoßfänger für ein Kraftfahrzeug mit einem ersten Stoßbereich, der mit einer Stoßstange eines anderen Kraftfahrzeugs in Kontakt kommen soll, vorgeschlagen wird. Weiterhin weist dieser Frontstoßfänger einen unterhalb des ersten Stoßbereichs angeordneten zweiten Stoßbereich auf, der mit einem Fußgänger mit dessen unteren Beinabschnitt in Kontakt kommen soll. Dabei ist der Stoßfänger mit einer äußeren Schale verkleidet und stützt sich im ersten Stoßbereich gegen einen Querträger ab, der mittels Crashboxen oder dergleichen an den Längsträgern der Karosserie montiert ist.

Dabei wird erstmals vorgeschlagen, dass der Frontstoßfänger in Fahrzeuglängsrichtung hinter dem zweiten unteren Stoßbereich ein Verstärkungselement aufweist, wie es vorstehend diskutiert ist. Damit lassen sich die vorstehend diskutierten Vorteile in synergetischer Weise auch mit einem so ausgebildeten Frontstoßfänger erzielen. Insoweit wird auf die vorstehende Diskussion verwiesen.

Die vorstehend diskutierte Erfindung wird nachfolgend in Ausführungsbeispielen anhand der Figuren der Zeichnung näher erläutert. Es zeigt:

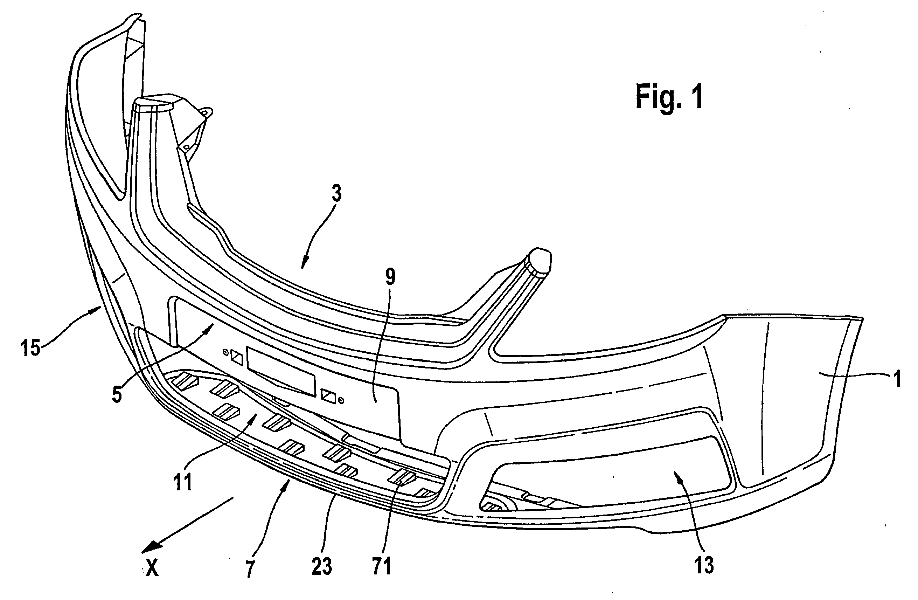

- Fig. 1: In einer dreidimensionalen Ansicht schräg von Vorne eine beispielhafte Ausführungsform einer als Formteil ausgebildeten äußeren Schale bzw. Verkleidung eines Stoßfängers mit einem oberen und einem unteren Stoßbereich;

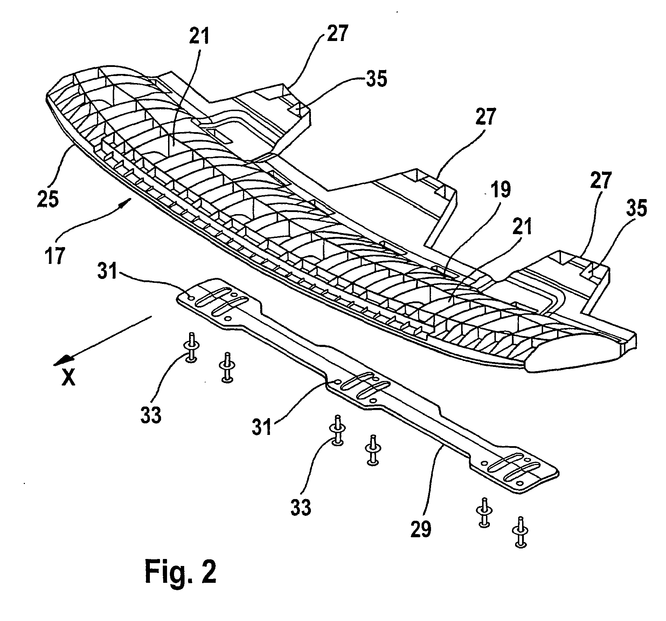

- Fig. 2: In einer dreidimensionalen Ansicht schräg von Vorne eine beispielhafte Ausführungsform eines Verstärkungselements, das als separate, in den unteren Stoßfängerbereich integrierbare Platte ausgebildet ist, wobei die dargestellte Ausführungsform eine Grundplatte aufweist, die auf beiden Seiten (unten und oben) über eine Gitterstruktur bzw. Verstärkungsrippen verfügt;

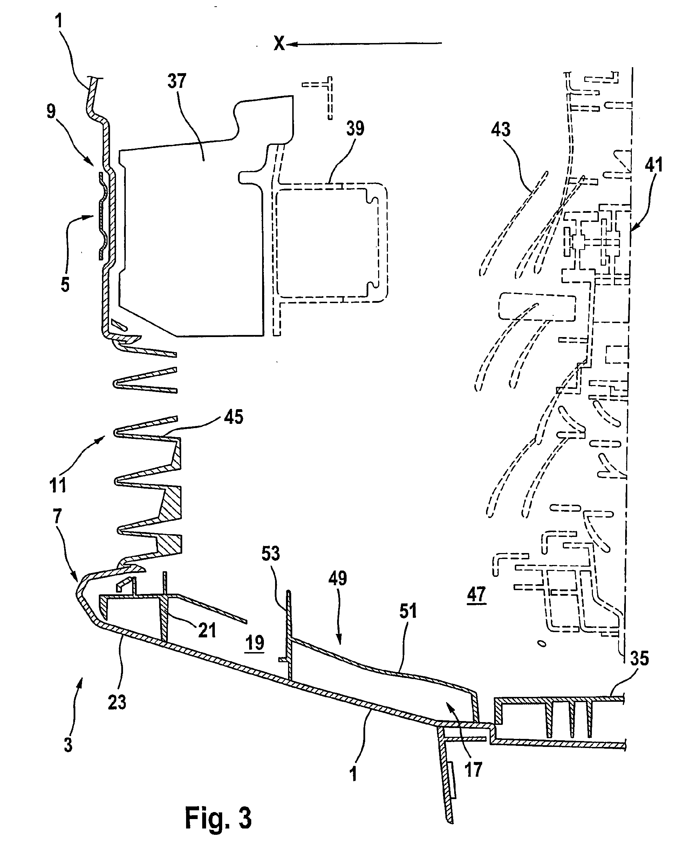

- Fig. 3: Einen vertikalen Schnitt in einer ersten sich in Längsrichtung erstreckenden Ebene parallel nahe bei der Fahrzeugmitte durch die in Fig. 1 gezeigte Stoßfängerschale mit darin im unteren Stoßfängerbereich integriertem, in Fig. 2 gezeigtem Verstärkungselement, sowie einem zwischen dem oberen und unteren Stoßbereich unterhalb eines im oberen Stoßbereich mit enthaltenen Nummernschildbereichs eingesetzten Lufteinlassgitter, sowie einem als Formteil ausgebildeten, zwischen dem oberen Stoßbereich der Stoßfängerschale und einem dahinter angeordneten Querträger (gestrichtelt dargestellt) angeordnetem Absorberelement;

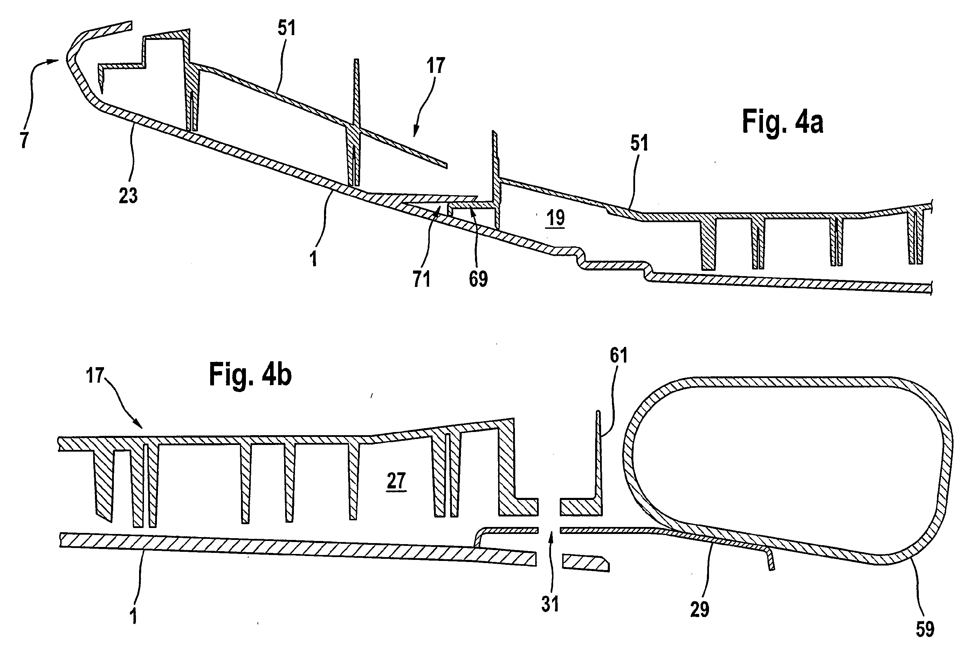

- Fig. 4: In zwei Teilansichten a) und b) jeweils einen vergrößerten, schematisch vereinfachten Schnitt des in Fig. 1 bis 3 gezeigten Stoßfängers, wobei in Teilansicht a) eine Verrastung zwischen dem Verstärkungselement und der Stoßfängerschale und in Teilansicht b) die Anbindung an die Querstrebe geschnitten verdeutlich ist;

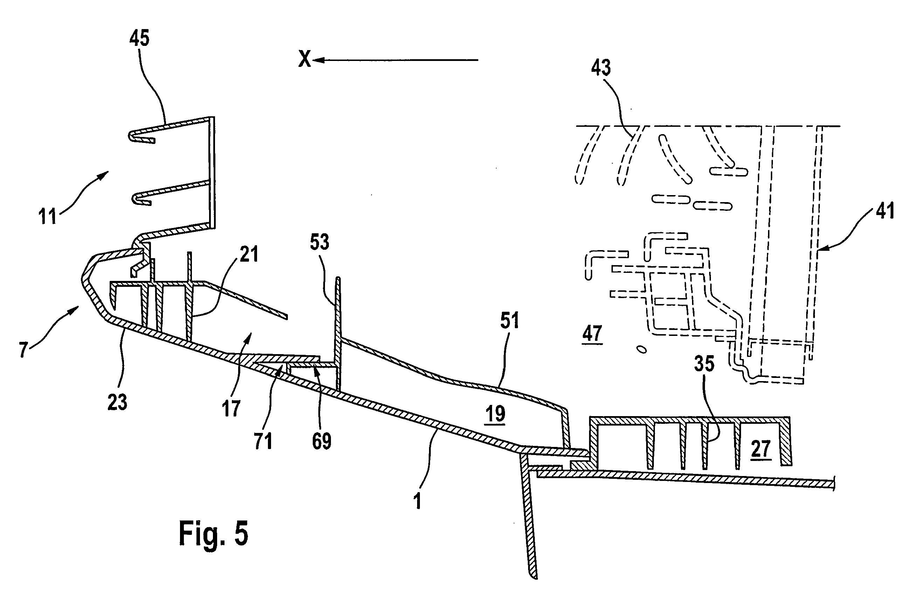

- Fig. 5: Einen vertikalen Schnitt in einer weiteren sich in Längsrichtung erstreckenden zweiten Ebene in Fahrzeugmitte durch die in Fig. 1 gezeigte Stoßfängerschale mit darin im unteren Stoßfängerbereich integriertem, in Fig. 2 gezeigtem Verstärkungselement mit gestrichelt angedeutetem Kühler, wobei eine Verrastung des Verstärkungselements im Schnitt gezeigt ist;

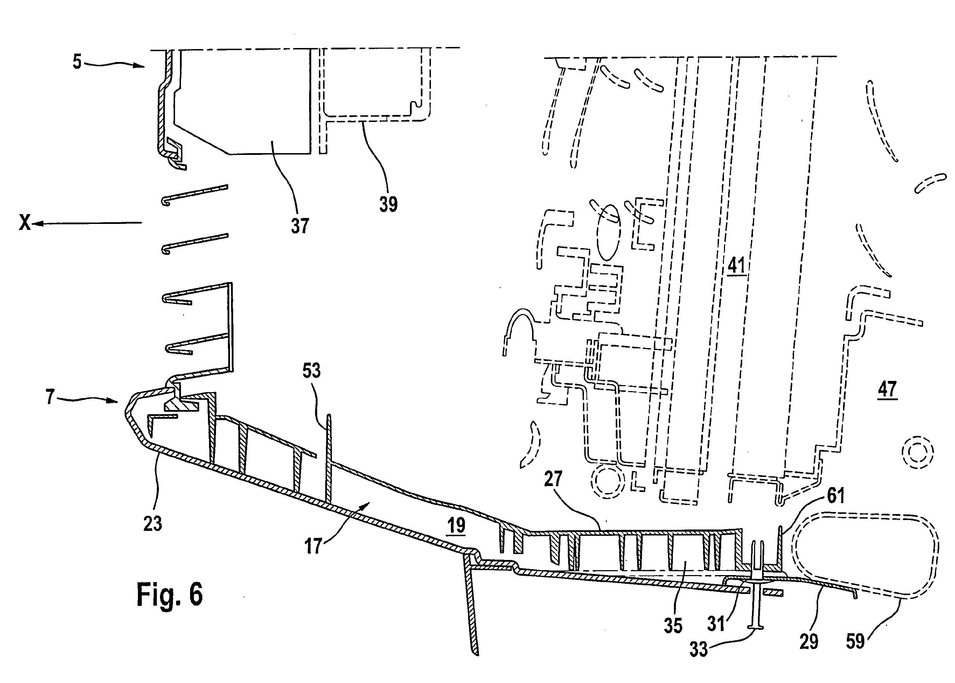

- Fig. 6: Einen vertikalen Schnitt in einer weiteren sich in Längsrichtung erstreckenden dritten Ebene knapp vor der Fahrzeugmitte durch die in Fig. 1 gezeigte Stoßfängerschale mit darin im unteren Stoßfängerbereich integriertem, in Fig. 2 gezeigtem Verstärkungselement mit gestrichelt angedeuteter hinterer Abstützung des Verstärkungselements gegen eine unterhalb des Kühlers angeordnete im Schnitt gestrichelt dargestellte Strebe; und

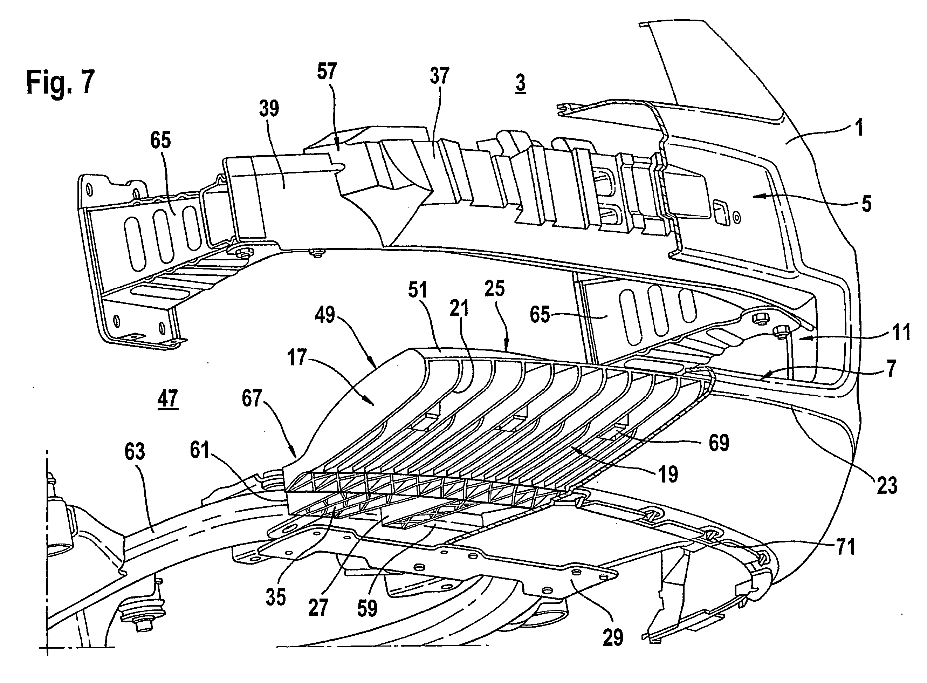

- Fig. 7: In einer dreidimensionalen Ansicht schräg von Vorne unten die in Fig. 1 bis 6 gezeigte Ausführungsform eines Frontstoßfängers mit im unteren Stoßbereich der Stoßfängerverkleidung integriertem, separatem Verstärkungselement, einschließlich dessen hintere Abstützung gegen einen unterhalb des Motorraums angeordneten Hilfsrahmen.

In Fig. 1 ist in einer dreidimensionalen Ansicht schräg von vorne eine beispielhafte Ausführungsform einer z.B. als Formteil ausgebildeten äußeren Schale bzw. Verkleidung 1 eines Stoßfängers 3 mit einem oberen Stoßbereich 5 und einem unteren Stoßbereich 7 gezeigt. Die Verkleidung bzw. Schale 1 des Stoßfängers 3 ist einstückig z.B. aus thermoplastischem Kunststoff hergestellt und kann in Wagenfarbe lackiert sein. Im oberen Stoßbereich 5 befindet sich eine Aussparung 9 zur Aufnahme eines nicht näher dargestellten Kennzeichens. Darunter ist eine Öffnung 11 erkennbar, die als Luftdurchlass für den hinter dem Stoßfänger 3 angeordneten, nicht näher dargestellten Kühler dient. Die Verkleidung bzw. Schale 1 erstreckt sich im wesentlichen über die gesamte Breite des Kraftfahrzeugs und zieht sich z.B. bis über dessen vordere Ecken zur Seite hin. Links und rechts von der Luftdurchlassöffnung 11 sind weitere Öffnungen 13 und 15 vorgesehen, die z.B. zur Aufnahme von tief sitzenden Beleuchtungsmitteln, wie beispielsweise Nebelleuchten, Blinker oder dergleichen dienen können Die Öffnungen 13 und 15 können auch mit Gittern versehen werden und als weitere Luftdurchlassschlitze dienen.

Der untere Stoßbereich 7 ist im montierten Zustand des Stoßfängers 3 in einer Höhe über dem Boden bzw. über der Fahrbahn angeordnet, die in etwa der Mitte des Unterschenkels eines normal gewachsenen Menschen entspricht. Der untere Stoßbereich 7 kann leicht über den oberen Stoßbereich 5 nach vorne hervorstehen. Ferner kann die Unterkante der unteren Luftdurchlassöffnung 11 in Längs- bzw. Fahrtrichtung X in etwa gleich weit vorstehen, wie die Oberkante der Luftdurchlassöffnung 11. Es ist sichergestellt, dass bei einem versehentlichen Anfahren eines Fußgängers dieser zuerst so tief im Bereich des Unterschenkels erfasst wird, dass er nicht umgestoßen und anschließend überfahren werden kann, sondern auf den relativ weichen, verformbaren Fahrzeugbug bzw. die Motorhaube aufgekippt wird, wodurch die Verletzungsgefahr oder zumindest die Schwere der Verletzung wesentlich reduziert wird. Dabei wird zugleich eine unerwünschte Beugung des Unterschenkels gegenüber dem Oberschenkel im Kniebereich verhindert.

Um das vorgenannte Aufkippen eines versehentlich erfassten Fußgängers über den Kraftfahrzeugbug auf die Motorhaube zu gewährleisten, muss jedoch der untere Stoßbereich 7 eine bestimmte Steifigkeit aufweisen, welche alleine von der Verkleidung bzw. Schale 1 des Stoßfängers 3 so nicht geleistet werden kann. Die erforderliche Steifigkeit wird mit dem Verstärkungselement 17 erzielt. Das Verstärkungselement 17 wird in den Rasthaken 71 eingerastet.

In Fig. 2 ist in einer dreidimensionalen Ansicht schräg von vorne eine beispielhafte Ausführungsform eines solchen Verstärkungselements 17, das als separate, in den unteren Stoßfängerbereich 7 integrierbare Platte 19 ausgebildet ist, gezeigt.

Die Verstärkungsplatte 19 weist in der hier dargestellten Ausführungsform zur Veranschaulichung der Verstärkungs- bzw. Versteifungsrippen 21 eine Grundplatte auf, die auf beiden Seiten der Grundplatte, also oben und unten, Rippen trägt. Die Grundplatte kann gleichwohl je nach Ausführungsform und Anwendungsfall bzw. gewünschter Festigkeit, etc., oberhalb und/oder unterhalb der Verstärkungsrippen 21 angeordnet sein. Es ist auch eine Ausführungsform denkbar, bei der auf beiden Seiten von den Verstärkungsrippen 21 Grundplatten angeordnet sind; wie hier schematisch vereinfacht dargestellt. In einer bevorzugten Ausführungsform sind die Versteifungsrippen 21 und die oberhalb der Rippen angeordnete Grundplatte einstückig aus einem thermoplastischen Kunststoff hergestellt.

Die Verstärkungsrippen 21 können sich in Längsrichtung X des Kraftfahrzeugs erstrecken und parallel nebeneinander angeordnet sein. Es können sich auch Verstärkungsrippen partiell quer dazu erstrecken. Es sind ferner im hinteren Bereich der Verstärkungsplatte 19 sich kreuzende Rippen zur weiteren Versteifung der Platte 19 vorgesehen.

Das Verstärkungselement 17 erstreckt sich im wesentlichen in horizontaler Richtung näherungsweise über die Breite des Frontstoßfängers 3. Das Verstärkungselement 17 ist als separate, in den unteren Stoßfängerbereich 7 integrierbare Platte 19 ausgebildet. Die Platte 19 muss nicht absolut eben ausgebildet sein, sondern kann mit dessen Kontur an die vorgegebenen Verhältnisse und die jeweilige packaging Situation des Kraftfahrzeugs angepasst werden.

Das Verstärkungselement 17 ist am unteren Stoßfängerbereich 7 mittels Verkleben, Verklippsen, Verschweißen, Vernieten, Verschrauben oder dergleichen montierbar. Die Verstärkungsrippen 21 erstrecken sich im montierten Zustand des Verstärkungselements 17 von der beispielsweise oben liegenden, mit der Rückseite zum nicht näher dargestellten Motorraum weisenden Grundplatte nach unten. Das Verstärkungselement 17 wird zumindest teilweise mit dem in Fahrtrichtung X vorderen Abschnitt 23 vom unteren Stoßfängerbereich 7 schalenartig umhüllt.

Das Verstärkungselement 17 wird dabei mit dessen vorderem Abschnitt 25 in den vorderen Abschnitt 23 integriert und über an dessen hinterem Ende angeordneten Armen 27 gegen ein Befestigungselement 29 abgestützt, welches sich seinerseits z.B. gegen einen entsprechenden Träger oder eine entsprechende Querstrebe abstützen kann. Der Befestigungsstreifen bzw. die Befestigungsstrebe 29 ist als langgezogene Montageplatte ausgebildet, die über Bohrungen 31 verfügt, durch welche entsprechende Befestigungsmittel 33, wie beispielsweise Schrauben, Bolzen, Nieten, Steckstifte oder dergleichen hindurch gesteckt und damit eine feste Verbindung mit dem Verstärkungselement 17 hergestellt werden kann. Hierfür weisen die Arme 27 entsprechende Durchgangsöffnungen oder Aussparungen auf. Die Arme 27 sind im hinteren Bereich der Verstärkungsplatte 19 in der hier dargestellten Ausführungsform an dieser einstückig angeformt und verfügen über Versteifungsrippen 35.

Der in Fig. 1 dargestellte Stoßfänger 3 und das in Fig. 2 gezeigte Verstärkungselement 17 sind in Fig. 3 in einem vertikalen Schnitt durch eine in Längsrichtung X liegende, parallel zur Fahrzeugmitte angeordnete Ebene gezeigt. Dabei sind die Stoßfängerschale 1 und das darin integrierte Verstärkungselement 7 im Schnitt mit durchgezogenen Linien dargestellt. Weiterhin sind in Fig. 3 der Querträger 39 sowie ein Kühler 41 mit dessen Lüfterrad 43 gestrichelt dargestellt. Zwischen dem oberen Stoßbereich 5 der Verkleidung 1 des Stoßfängers 3 und dem Querträger 39 ist ein Absorberelement 37 angeordnet um Crashenergie zu absorbieren. Der Querträger 39 stützt sich seinerseits über hier nicht näher dargestellte Crashboxen gegen Längsträger ab.

Die Luftdurchlassöffnung 11, durch welche Luft zum Kühler 41 einströmen kann, ist mit einem Gitter 45 verkleidet, welches in die Schale 1 eingeklippst ist.

Das Verstärkungselement 17 weist auf der dem Motorraum 47 zugewandten Rückseite 49 eine Grundplatte 51 auf, von der sich die Verstärkungsrippen 21 im wesentlichen rechtwinklig nach unten erstrecken und bei der dargestellten Ausführungsform aus dem selben Material einstückig an der Grundplatte 51 angeformt sind.

Die Verstärkungsplatte 19 weist auf der rückwärtigen Seite 49 der Grundplatte 51 eine dem Motorraum 47 zugewandte Kühlerabweiseinrichtung 53 auf, welche sicherstellt, dass im Falle eines Aufpralls beim Eindrücken des Stoßfängers 3 der Kühler 41 sich aus seiner Verankerung lösen kann, funktionstüchtig bleibt und nicht nach unten abtaucht.

In Fig. 4 ist in zwei schematisch vereinfachten, vergrößerten Schnittansichten in einer Teilansicht a) eine vordere Anbindung des Verstärkungselements 17 an die Schale 1 des Stoßfängers 3 sowie in Teilansicht b) eine hintere Anbindung des Verstärkungselements 17 an eine Querstrebe 59 verdeutlicht.

Das Verstärkungselement 17 ist im unteren Bereich 7 des Frontstoßfängers 3 in dessen vorderen Abschnitt 23 mit dem beispielsweise als Einrastnase ausgebildeten Einrastelement 69 in eine damit korrelierende Einrastöffnung 71 eingerastet bzw. eingeklippst. Das hintere Ende des Verstärkungselements 17 ruht mit einer Schulter 61 des Armes 27 vor der Querstrebe 59. Dabei ist der Arm 27 mit dem Verbindungselement bzw. der Befestigungsstrebe 29 an der Querstrebe 59 befestigt, wobei das hintere Ende der Stoßfängerschale 1 als äußere Hülle zugleich vom

Verbindungselement 29 gehalten bzw. an diesem befestigt ist. Das Verstärkungselement 17, die Befestigungsstrebe 29 und die Schale 1 werden dabei mit einem nicht näher dargestellten Befestigungsmittel (vgl. z.B. Fig. 2 oder 6, dortige Bezugsziffer 33), das durch die gemeinsame Öffnung geführt wird, miteinander verbunden.

In Fig. 5 ist in einem vertikalen Schnitt in einer weiteren sich in Längsrichtung X erstreckenden zweiten Ebene in Fahrzeugmitte durch die in Fig. 1 gezeigte Stoßfängerschale 1 mit darin im unteren Stoßfängerbereich 7 integrierten, in Fig. 2 gezeigten Verstärkungselement 17 mit gestrichelt angedeutetem Kühler 41, gezeigt. Wie aus Figuren 2 bis 5 deutlich wird, weist das Verstärkungselement 17 verschiedene Verstärkungsrippen 27 auf. Die Grundplatte 51 des Verstärkungselements 17 trägt im in Fahrzeuglängsrichtung hinteren Bereich beispielsweise kreuzförmig ausgebildete Verstärkungsrippen 35. Nach vorne hin sind die Verstärkungsrippen beispielsweise im wesentlichen parallel zueinander angeordnet und erstrecken sich im wesentlichen in Längsrichtung X. Es sind zudem teilweise zur weiteren Ausstärkung Querrippen vorgesehen, die im Schnitt nicht erkennbar sind. Zum Teil deuten die Linien auch die auslaufenden Spitzen der Längsrippen 21 an. Weiterhin ist eine im Verstärkungselement 17 zwischen den nach unten weisenden Rippen 21 enthaltene, beispielhafte Einrastnase 69 im Schnitt dargestellt.

In Fig. 6 ist ein weiterer Schnitt in einer vierten Ebene knapp vor der Fahrzeugmitte dargestellt, mit gestrichelt angedeuteter, hinterer Abstützung des Verstärkungselements 17 gegen eine unterhalb des Kühlers 41 angeordnete, im Schnitt gestrichelt dargestellte Strebe 59. Das plattenartig ausgebildete Verstärkungselement 17 ist in dessen hinterem Bereich an der Querstrebe 59 mit dem länglich ausgebildeten Befestigungselement bzw. der Befestigungsstrebe 29 abgestützt, wobei die Befestigungsstrebe 29 mittels Klippse, Niete, Bolzen oder dergleichen Befestigungsmittel 33, die durch eine Bohrung 31 hindurch ragen, im hinteren Bereich des Verstärkungselements 17 an wenigstens einem Arm 27 befestigt ist. Dabei kann sich der Arm 27 der Verstärkungsplatte 19 entweder, wie hier dargestellt, mittels der Befestigungsstrebe 29 unterhalb der Querstrebe 59 an dieser abstützen, oder auch oberhalb dieser befestigt sein. Wesentlich ist dabei, dass das Verstärkungselement 17 sich in Längsrichtung X rückwärts derart gegen die Querstrebe 59 oder ein ähnliches Bauteil mit seiner rückwärtigen Kante 61 bzw. mit entsprechenden Abschnitten abstützen kann, dass die Verstärkungsplatte 19 bei einer Belastung in Längsrichtung nicht nach oben oder unten ausweicht.

Wie aus Fig. 1 bis 6 ersichtlich ist, ragt der untere Stoßbereich 7 über den oberen Stoßbereich 5 hervor, so dass sicher gestellt ist, dass der untere Beinbereich eines versehentlich erfassten Fußgängers zuerst mit dem Stoßfänger 3 in Kontakt kommt.

In Fig. 7 ist in einer schematisch vereinfachten dreidimensionalen Ansicht schräg von vorne unten die in Fig. 1 bis 6 gezeigte Ausführungsform eines Frontstoßfängers 3 mit dem im unteren Stoßbereich 7 der Stoßfängerverkleidung 1 integrierten, separaten Verstärkungselement 17, einschließlich dessen hinterer Abstützung gegen einen unterhalb des Motorraums 47 angeordneten Hilfsrahmen 63 nochmals veranschaulicht.

Das in Fig. 7 gezeigte Frontstoßfängersystem eines Kraftfahrzeuges weist den häufig auch als Frontaufprallbegrenzer oder "front bumper beam" bezeichneten Querträger 39 auf. Am Querträger 39 sind links und rechts sogenannte Halter bzw. "brackets" oder Crashboxen 65 montiert, über die sich der Quersträger 39 gegen nicht näher dargestellte Längsträger des Kraftfahrzeuges abstützt. In Fahrtrichtung X vor dem Aufprallbegrenzer bzw. Querträger 39 ist der sog. Aufprall-Energieabsorber bzw. das Absorberelement 37 angeordnet, welches beispielsweise aus einem E-PP Schaumteil gebildet sein kann. Vor dem Absorberelement 37 befindet sich wiederum die Verkleidung 1 für den Frontstoßfänger 3, wobei die Stoßfängerverkleidung 1 häufig auch als "bumper fascia" bezeichnet wird. Der unterhalb der unteren Kühlluftöffnung 11 befindliche untere Teil 7 der Stoßfängerverkleidung 1 bildet für sich alleine zunächst einen unverstärkten Stoßfänger-Abschnitt und wird in der hier dargestellten Ausführungsform nach hinten ebenfalls am Hilfsrahmen 63 bzw. an dessen Querstrebe 59 befestigt.

Das häufig auch als "lower bumper stiffener" (kurz: LBS) bezeichnete Verstärkungselement 17 ist im unteren Teil 7 der Stoßfängerverkleidung 1 angeordnet und dort eingeklippst. Im Zusammenwirken mit dem Absorberelement 37 vor dem Querträger 39 sorgt das Verstärkungselement 17 dafür, dass die strengen "lower leg"-Fußgängerschutzvorgaben erfüllt werden können. Durch die Gegenstütze bzw. die streifenartig ausgebildete Befestigungsstrebe 29, die am Hilfsrahmen 63 bzw. an dessen Querstrebe 59 befestigt ist, kann das Verstärkungselement 17 nicht unter dem Hilfsrahmen 63 wegtauchen, sondern stützt sich bei einem Aufprall mit dessen hinterer Kante 61 bzw. mit dessen hinterem Ende 67 an der Querstrebe 59 des Hilfsrahmens 63 ab. Hierbei wird der Hilfsrahmen 63 häufig auch als "subframe" bezeichnet.

Das Verstärkungselement 17 kann eine Grundplatte 51 mit beispielsweise nach oben/oder nach unten abstehenden Rippen 21 aufweisen. In der hier dargestellten, bevorzugten Ausführungsform erstrecken sich die Rippen 21 von der Grundplatte 51 nach unten. Die Grundplatte 51 muss dabei nicht eben sein, sondern kann sich in ihrer jeweiligen Geometrie den Package-Verhältnissen des jeweiligen Kraftfahrzeuges anpassen. Die Verstärkungsrippen 21 können an der Grundplatte 51 angespritzt, oder als Zusammenbauteil mit dieser verbunden sein. Die Verstärkungsrippen 21 bzw. die hinteren Versteifungsrippen 35 der hinteren Arme 27 der Verstärkungsplatte 19 können bezüglich deren Abstand zueinander, hinsichtlich deren Materialstärke, Bauhöhe, Länge, Lage, Ausrichtung und Verbindungen untereinander (z.B. Diagonalrippen, Querrippen, Kreuzrippen oder dergleichen) für eine optimale Erzielung der "lower leg"-Fußgängerschutzvorgaben unter Berücksichtigung der fahrzeugspezifischen Gegebenheiten optimal aufeinander abgestimmt werden. Dabei müssen die Verstärkungsrippen 21 bzw. die Versteifungsrippen 35 nicht zwingend geradlinig verlaufen.

Die Grundplatte 51 und die Rippen 21 bzw. 35 können zur Gewichtsreduzierung partiell mit Löchern oder Ausschnitten versehen sein. Das plattenartig ausgebildete Verstärkungselement 17 ist als Verstärkungsplatte 19 beispielsweise aus Kunststoff hergestellt, besonders bevorzugt wird thermoplastischer Kunststoff verwendet. Alternativ könnte man auch GFK-, CFK oder andere Verbundwerkstoffe bzw. stabile aber zugleich leichte Materialien in Erwägung ziehen. Dabei können im Bedarfsfalle Materialverstärkungen, wie beispielsweise Füllstoffe auch aus Metall, Inlets, Inserts oder dergleichen vorgesehen sein. Als separates Einzelteil lässt sich das Verstärkungselement 17 kundendienstfreundlich austauschen. Das Verstärkungselement 17 kann mit dessen vorderem Abschnitt 25 in den vorderen Abschnitt 23 der unteren Stoßfängerverkleidung 7 eingeschoben und mit dieser verklippst, verschweißt, vernietet und/oder verschraubt werden.

In Fig. 7 sind die im Verstärkungselement 17 zwischen den nach unten weisenden Verstärkungsrippen 21 enthaltenen Einrastnasen 69 schwach erkennbar. Mit den Einrastnasen wird das Verstärkungselement 17 im unteren Bereich des Frontstoßfängers in damit korrelierende, schwach erkennbare Einrastöffnungen 71 eingerastet oder eingeklippst.

Die Gegenstütze bzw. Befestigungsstrebe 29, die sich quer zur Fahrzeuglängsrichtung X erstreckt, kann in ihrer Form der jeweiligen Geometrie der Package-Verhältnissen des Kraftfahrzeuges angepasst werden. Falls erforderlich können in der Befestigungsstrebe 29 aussteifende Sicken und/oder eine Randumstellung bzw. Bördelung vorgesehen sein. Die Gegenstütze bzw. Befestigungsstrebe 29 kann in Materialstärke, Baugröße, Lage, Ausrichtung und Verbindungen auf eine Einhaltung und Optimierung der "lower leg"-Fußgängerschutzvorgaben unter Berücksichtigung der fahrzeugspezifischen Gegebenheiten abgestimmt werden. Die Gegenstütze bzw. Befestigungsstrebe 29 kann zur Gewichtsreduzierung partiell mit Löchern und/oder Ausschnitten versehen sein. Sie kann aus Kunststoff, Metall oder anderen leichten und zugleich ausreichend stabilen Materialien hergestellt werden. Auch die Gegenstütze bzw. Befestigungsstrebe 29 lässt sich als Einzelteil kundendienstfreundlich austauschen. Sie wird hierfür lediglich am Hilfsrahmen 63 bzw. an dessen Querstrebe 59 verklippst, verschweißt, vernietet und/oder verschraubt.

Die vorstehend diskutierte Erfindung gibt ein Verstärkungselement für einen unteren Stoßbereich eines Frontstoßfängers eines Kraftfahrzeugs zum Schutz von Fußgängern beim Aufprall eines unteren Beinabschnitts gegen den unteren Stoßbereich des Frontstoßfängers an. Dabei schließt sich das Verstärkungselement in Fahrtrichtung hinter dem unteren Frontstoßfängerbereich an diesen an. Das Verstärkungselement weist eine Grundplatte mit daran befestigten Verstärkungsrippen auf. Es erstreckt sich im wesentlichen in horizontaler Richtung, näherungsweise über die Breite des Frontstoßfängers. Dabei wird erstmals vorgeschlagen, dass das Verstärkungselement als separate, in den unteren Stoßfängerbereich integrierbare Platte ausgebildet ist. Weiter diskutiert die vorstehende Erfindung einen damit ausgerüsteten Frontstoßfänger für ein Kraftfahrzeug.

### Bezugszeichenliste

| | |
|---|---|
| Schale bzw. Verkleidung | 1 |
| Stoßfänger | 3 |
| oberer Stoßbereich | 5 |
| unterer Stoßbereich | 7 |
| Aussparung für Kennzeichen | 9 |
| Luftdurchlassöffnung für den Kühler | 11 |
| Öffnung für Beleuchtungsmittel | 13 |
| Öffnung für Beleuchtungsmittel | 15 |
| Verstärkungselement | 17 |
| Platte | 19 |
| Verstärkungsrippen | 21 |
| Vorderer schalenartiger Abschnitt von 7 | 23 |
| Vorderer Abschnitt von 17 | 25 |
| Hintere Arme von 17 | 27 |
| Befestigungsstrebe | 29 |
| Durchgangsbohrung | 31 |
| Befestigungsmittel (Niet, Schraube,...) | 33 |
| Versteifungsrippen von 27 | 35 |
| Absorberelement | 37 |
| Querträger | 39 |
| Kühler | 41 |
| Lüfterrad von 41 | 43 |
| Luftdurchlassgitter | 45 |
| Motorraum | 47 |
| Rückseite von 17 | 49 |
| Grundplatte von 17 | 51 |
| Kühlerabweiseinrichtung | 53 |
| - | 55 |
| Schulter von 37 gegen 39 | 57 |
| Querstrebe | 59 |
| Hintere Kante von 17 | 61 |
| Hilfsrahmen | 63 |
| Halter bzw. Crash Boxen für 39 | 65 |
| Hinterer Endabschnitt von 17 | 67 |
| Einrastnase | 69 |
| Einrastöffnung | 71 |

## Patentansprüche

1. Verstärkungselement (17) für einen unteren Stoßbereich (7) eines Kraftfahrzeug-Frontstoßfängers (3) zum Schutz von Fußgängern beim Aufprall eines unteren Beinabschnitts gegen den unteren Bereich (7) des Frontstoßfängers (3), wobei das Verstärkungselement (17) sich in Fahrtrichtung (X) hinter dem unteren Bereich (7) des Frontstoßfängers (3) an diesen anschließt, eine Grundplatte (51) mit daran befestigten Verstärkungsrippen (21) aufweist, und sich im wesentlichen in horizontaler Richtung näherungsweise über die Breite des Frontstoßfängers (3) erstreckt, wobei das Verstärkungselement (17) als separate, in den unteren Stoßfängerbereich (7) integrierbare Platte (19) ausgebildet ist, an der sich die Verstärkungsrippen (21) bis in einen von dem unteren Bereich (7) schalenartig umhüllten vorderen Abschnitt (23) des Verstärkungselements (17) erstrecken, **dadurch gekennzeichnet, dass** in der Grundplatte (51) zwischen den Verstärkungsrippen (21) Befestigungspunkte (69) für den unteren Stoßfängerbereich (7) ausgebildet sind.

2. Verstärkungselement nach Anspruch 1, **dadurch gekennzeichnet, dass** das Verstärkungselement (17) am unteren Stoßfängerbereich (7) mittels Verkleben, Verklippsen, Verschweißen, Vernieten, Verschrauben oder dergleichen montierbar ist.

3. Verstärkungselement nach Anspruch 1 oder 2, **dadurch gekennzeichnet, dass** die Verstärkungsrippen (21) sich von der oben liegenden, mit der Rückseite zum Motorraum (47) weisenden Grundplatte (51) nach unten erstrecken.

4. Verstärkungselement nach einem der Ansprüche 1 bis 3, **dadurch gekennzeichnet, dass** sich die Verstärkungsrippen (21) im wesentlichen rechtwinklig von der Grundplatte (51) erstrecken und aus demselben Material einstückig an dieser angeformt sind.

5. Verstärkungselement nach einem der Ansprüche 1 bis 4, **dadurch gekennzeichnet, dass** die Befestigungspunkte als Einrastnasen (69) ausgebildet sind.

6. Verstärkungselement nach einem der Ansprüche 1 bis 5, **dadurch gekennzeichnet, dass** die Befestigungspunkte in der Grundplatte (51) mit entsprechenden Befestigungspunkten in der Schale (1) des unteren Stoßfängerbereichs (7), die vorzugsweise als Einrastöffnungen (71) ausgebildet sind, korrelieren.

7. Verstärkungselement nach einem der Ansprüche 1 bis 6, **dadurch gekennzeichnet, dass** die Grundplatte (51) im in Fahrzeuglängsrichtung (X) hinteren Bereich kreuzförmig ausgebildete Verstärkungsrippen (27) aufweist, an die sich nach vorne hin parallel zueinander angeordnete, im wesentlichen in Längsrichtung (x) orientierten Längsrippen (21) anschließen.

8. Verstärkungselement nach einem der Ansprüche 1 bis 7, **dadurch gekennzeichnet, dass** die Grundplatte (51) auf deren rückwärtiger, dem Motorraum (47) zugewandter Seite (49) eine Kühlerabweiseinrichtung (53) trägt.

9. Verstärkungselement nach einem der Ansprüche 1 bis 8, **dadurch gekennzeichnet, dass** es aus Kunststoff, vorzugsweise aus thermoplastischem Kunststoff, hergestellt ist.

10. Frontstoßfänger (3) für ein Kraftfahrzeug mit einem ersten Stoßbereich (5), der mit einer Stoßstange eines anderen Kraftfahrzeugs in Kontakt kommen soll, sowie einem unterhalb des ersten Stoßbereichs (5) angeordneten zweiten Stoßbereich (7), der mit einem Fußgänger mit dessen unteren Beinabschnitt in Kontakt kommen soll, wobei der Stoßfänger (3) eine äußere Schale (1) aufweist und sich im ersten Stoßbereich (5), vorzugsweise über ein dazwischen angeordnetes Absorberelement (37), gegen einen Querträger (39) abstützt, der mittels Crashboxen (65) oder dergleichen an den Längsträgern der Karosserie montiert ist, **dadurch gekennzeichnet, dass** in Fahrzeuglängsrichtung (X) hinter dem zweiten, unteren Stoßbereich (7) ein Verstärkungselement (17) nach einem der Ansprüche 1 bis 9 vorgesehen ist.

## Claims

1. A reinforcing element (17) for a lower area of impact (7) of a front bumper (3) of a motor vehicle for protecting pedestrians when their lower leg area impacts the lower impact area (7) of the front bumper (3), with the reinforcing element (17) being mounted behind the lower area (7) of the front bumper (3) in the travelling direction (X), having a base plate (51) with reinforcing ribs (21) fastened thereto, and extending in a substantially horizontal direction approximately across the width of the front pumper (3), with the reinforcing element (17) being arranged as a separate plate (19) that can be integrated in the lower bumper area (7), on which the reinforcing ribs (21) extend up to a front section (23) of the reinforcing element (17), which front section (23) is enveloped in the manner of shell by the lower area (7), **characterized in that** fixing points (69) for the lower bumper area (7) are formed in the base plate (51) between the reinforcing ribs (21).

2. A reinforcing element according to claim 1, **characterized in that** the reinforcing element (17) can be mounted on the lower bumper area (7) by means of gluing, clipping, welding, riveting, screwing or the like.

3. A reinforcing element according to claim 1 or 2, **characterized in that** the reinforcing ribs (21) extend downwardly from the upper base plate (51) facing with its rear side towards the engine compartment (47).

4. A reinforcing element according to one of the claims 1 to 3, **characterized in that** the reinforcing ribs (21) extend in a substantially rectangular manner from the base plate (51) and are integrally formed on said base plate (51) from the same material.

5. A reinforcing element according to one of the claims 1 to 4, **characterized in that** the fastening points are arranged as latching noses (69).

6. A reinforcing element according to one of the claims 1 to 5, **characterized in that** the fixing points in the base plate (51) correlate with respective fixing points in the shell (1) of the lower bumper area (7), which are preferably arranged as latching openings (71).

7. A reinforcing element according to one of the claims 1 to 6, **characterized in that** the base plate (51) comprises reinforcing ribs (27) which are arranged in the manner of a cross in the rear region in the longitudinal direction (X) of the vehicle and behind which are arranged longitudinal ribs (21) which are disposed towards the front parallel with respect to one another and are oriented substantially in the longitudinal direction (X).

8. A reinforcing element according to one of the claims 1 to 7, **characterized in that** the base plate (51) comprises a radiator deflecting device (53) on its rear side (49) facing the engine compartment (47).

9. A reinforcing element according to one of the claims 1 to 8, **characterized in that** it is made of plastic, preferably a thermoplastic synthetic material.

10. A front bumper (3) for a motor vehicle, comprising a first area of impact (5) which is to come into contact with a bumper of another motor vehicle, and a second area of impact (7) which is arranged beneath the first area of impact (5) and which is to come into contact with a lower leg area of a pedestrian, with the bumper (3) having an external shell (1) and being supported in the first area of impact (5), preferably by way of an interposed absorber element (37), against a cross-member (39), which is mounted by means of crash boxes (65) on longitudinal members of the car body, **characterized in that** a reinforcing element (17) according to one of the claims 1 to 9 is provided behind the second lower area of impact (7) in the longitudinal direction (X) of the vehicle.

## Revendications

1. Élément de renfort (17) pour une zone d'impact inférieure (7) d'un pare-chocs avant de véhicule à moteur (3)' destiné à protéger les piétons en cas de collision d'une partie inférieure des jambes contre la zone inférieure (7) du pare-chocs avant (3), lequel élément de renfort (17) se raccorde au pare-chocs avant (3) derrière la zone inférieure (7) de celui-ci, vu dans le sens de la marche (X), présente une plaque de base (51) avec des nervures de renfort (21) fixées dessus et s'étend sensiblement à l'horizontale, à peu près sur la largeur du pare-chocs avant (3), l'élément de renfort (17) étant conçu comme une plaque (19) séparée pouvant être intégrée dans la zone de pare-chocs inférieure (7), sur laquelle les nervures de renfort (21) s'étendent jusqu'à une partie antérieure (23) de l'élément de renfort (17) enveloppée comme par une coque par la zone inférieure (7), **caractérisé en ce que** sont formés dans la plaque de base (51), entre les nervures de renfort (21), des points de fixation (69) pour la zone de pare-chocs inférieure (7).

2. Élément de renfort selon la revendication 1, **caractérisé en ce que** l'élément de renfort (17) peut être monté sur la zone de pare-chocs inférieure (7) par collage, clipsage, soudage, rivetage, vissage ou similaire.

3. Élément de renfort selon la revendication 1 ou 2, **caractérisé en ce que** les nervures de renfort (21) s'étendent vers le bas à partir de la plaque de base (51) située en haut et dont la face arrière est orientée vers le compartiment moteur (47).

4. Élément de renfort selon l'une des revendications 1 à 3, **caractérisé en ce que** les nervures de renfort (21) s'étendent perpendiculairement à partir de la plaque de base (51) et sont formées sur celle-ci d'un seul tenant dans le même matériau.

5. Élément de renfort selon l'une des revendications 1 à 4, **caractérisé en ce que** les points de fixation sont conçus comme des ergots d'emboîtement (69).

6. Élément de renfort selon l'une des revendications 1 à 5, **caractérisé en ce que** les points de fixation de la plaque de base (51) sont associés à des points de fixation correspondants dans la coque (1) de la zone de pare-chocs inférieure (7), qui sont de préférence conçus comme des ouvertures d'emboîtement (71).

7. Élément de renfort selon l'une des revendications 1 à 6, **caractérisé en ce que** la plaque de base (51) présente, dans la partie arrière dans le sens longitudinal du véhicule (X), des nervures de renfort (27) formées auxquelles se raccordent des nervures longitudinales (21) disposées parallèlement les unes aux autres vers l'avant et orientées sensiblement dans le sens longitudinal (x).

8. Élément de renfort selon l'une des revendications 1 à 7, **caractérisé en ce que** la plaque de base (51) porte sur sa face arrière (49) orientée vers le compartiment moteur (47) un dispositif de refoulement du radiateur (53).

9. Élément de renfort selon l'une des revendications 1 à 8, **caractérisé en ce qu'**il est fabriqué en plastique, de préférence en thermoplastique.

10. Pare-chocs avant (3) pour un véhicule à moteur avec une première zone d'impact (5) destinée à venir en contact avec un pare-chocs d'un autre véhicule, ainsi qu'avec une deuxième zone d'impact (7) disposée en dessous de la première zone d'impact (5) et destinée à venir en contact avec la région inférieure des jambes d'un piéton, le pare-chocs (3) présentant une coque extérieure (1) et s'appuyant dans la première zone d'impact (5), de préférence par l'intermédiaire d'un élément absorbant (37) disposé entre eux, contre une traverse (39) qui est montée sur les longerons de la carrosserie en intercalant des caissons de collision (65) ou similaires, **caractérisé en ce qu'**il est prévu derrière la deuxième zone d'impact (7) inférieure, dans le sens longitudinal du véhicule, un élément de renfort (17) selon l'une des revendications 1 à 9.
